# EUROPEAN PATENT APPLICATION

(11) **EP 4 266 027 A1**
(43) Date of publication of application: **25.10.2023**
(21) Application number: 21906651.1
(22) Date of filing: 15.12.2021
(51) Int. Cl.: G01N 15/04, G01N 21/07, G01N 21/19

(54) **OPTICAL CELL FOR SEDIMENTATION ANALYSIS, CENTRIFUGAL SEDIMENTATION ANALYSIS DEVICE, AND CENTRIFUGAL SEDIMENTATION ANALYSIS METHOD**

(30) Priority: 16.12.2020 JP 2020208085
(71) Applicant: Resonac Corporation, Tokyo 105-8518 (JP)
(72) Inventor: MIYAMURA Yasunao, Tokyo 105-8518 (JP); NISHIOKA Ayako, Tokyo 105-8518 (JP); KADOWAKI Yasushi, Tokyo 105-8518 (JP); YAMATAKE Kuniaki, Tokyo 105-8518 (JP); HARA Masanao, Tokyo 105-8518 (JP); YAMAKI Shigeru, Tokyo 105-8518 (JP); OHATA Hideki, Tokyo 105-8518 (JP)
(74) Representative: Strehl Schübel-Hopf & Partner
(86) International application number: PCT/JP2021/046254
(87) International publication number: WO 2022/131289

(57) **Abstract**

This optical cell for sedimentation analysis has a pair of opposing surfaces through which light is transmitted, and two polarizing plates, in which each of the two polarizing plates is disposed in a crossed Nicols state on each of the inner surfaces of the pair of opposing surfaces.

## Description

### [Technical Field]

The present invention relates to an optical cell for sedimentation analysis, a centrifugal sedimentation analysis device, and a centrifugal sedimentation analysis method.

Priority is claimed on Japanese Patent Application No. 2020-208085, filed December 16, 2020, the content of which is incorporated herein by reference.

### [Background Art]

Patent Document 1 discloses a method capable of improving the accuracy of analyzing and evaluating the state of aggregation and dispersion of particles in a system in which liquid or solid particles are present in a liquid medium, and a device suitable for carrying out the method. This device measures the particle size distribution and the zeta potential simultaneously by providing a pair of electrodes in a sample cell attached to a centrifugal sedimentation type particle size distribution analysis device and measuring the potential difference between the electrodes during sedimentation or floating. Both the measurement results are used to analyze and evaluate the state of aggregation and dispersion of particles.

Patent Document 2 discloses a particle size distribution measuring device and the like intended for enabling highly accurate measurement of a particle size distribution over a wide range of particle sizes including microparticle sizes. The particle size distribution measuring device of Patent Document 2 is equipped with a centrifugal sedimentation type measurement mechanism for rotating a measurement cell containing a group of particles dispersed in a dispersion medium to cause the particles to settle while simultaneously irradiating the measurement cell with light to detect transmitted light, and measuring a first particle size distribution based on changes in the transmitted light intensity, and a dynamic light scattering type measurement mechanism for detecting scattered light generated by irradiating the group of particles with light, and measuring a second particle size distribution based on changes in the scattered light intensity caused by Brownian motion of the particles. Furthermore, it is disclosed that in the particle size distribution measuring device, after detection of the transmitted light by the centrifugal sedimentation type measurement mechanism, the dynamic light scattering type measurement mechanism irradiates the measurement cell R with light to measure the second particle size distribution.

Patent Document 3 discloses a centrifugal microscope and a centrifugal microscopic observation method, which can realize polarized light observation. This centrifugal microscope is equipped with a freely rotatably provided disc having a sample chamber for accommodating a sample, an optical system for polarized light observation having an objective lens, in which the sample chamber is disposed so as to cross the optical axis due to rotation of this disc, and a light source that emits laser light to the optical system for polarized light observation at the timing when the sample chamber crosses the optical axis of the objective lens.

### [Citation List]

### [Patent Documents]

[Patent Document 1] Japanese Unexamined Patent Application, First Publication No. H07-128215
[Patent Document 2] PCT International Publication No. WO 2018/092573
[Patent Document 3] Japanese Unexamined Patent Application, First Publication No. H11-109245

### [Summary of Invention]

### [Technical Problem]

However, in the devices of Patent Documents 1 and 2, it cannot be clarified whether the phase is anisotropic, and information about anisotropic sedimentation of anisotropic particles cannot be obtained. Although this is possible with the device of Patent Document 3, in order for polarized light to be transmitted through the optical cell wall and reach the sample, the material of the optical cell is limited to an expensive material that has no birefringence and can withstand centrifugal acceleration. Meanwhile, anisotropic sedimentation means that sedimentation of settling particles accompanied by orientation.

According to an aspect of the present invention, in view of the above-described circumstances regarding the measurement of anisotropic sedimentation of anisotropic particles, it is an object to provide an optical cell for sedimentation analysis, for which restrictions on the quality of material are more relaxed, a centrifugal sedimentation analysis device, and a centrifugal sedimentation analysis method.

### [Solution to Problem]

That is, the present invention includes the following configurations.

[1] An optical cell for sedimentation analysis, the optical cell having:
   a pair of opposing surfaces through which light is transmitted; and
   two polarizing plates,
   in which each of the two polarizing plates is disposed in a crossed Nicols state on each of the pair of opposing surfaces.
[2] The optical cell for sedimentation analysis according to the above item [1],
   in which the pair of opposing surfaces are composed of a resin having birefringence.
[3] The optical cell for sedimentation analysis according to the above item [2],
   in which the resin is a polycarbonate.
[4] A centrifugal sedimentation analysis device having the optical cell according to any one of the above items [1] to [3],
   in which centrifugal acceleration is applied to the optical cell for sedimentation analysis, and an intensity of light transmitted through the two polarizing plates is measured.
[5] The centrifugal sedimentation analysis device according to the above item [4],
   in which an angle formed between a direction in which centrifugal acceleration is applied to the optical cell for sedimentation analysis and each of polarization axes of the two polarizing plates is 35° to 55°.
[6] The centrifugal sedimentation analysis device according to the above item [4] or [5],
   in which the intensity of the light is measured in the direction of centrifugal acceleration, and a distribution of intensities of light transmitted through the two polarizing plates in the direction of centrifugal acceleration is obtained.
[7] A centrifugal sedimentation analysis method including:
   using the device according to the above item [4] or [5];
   applying centrifugal acceleration to the optical cell for sedimentation analysis containing a sample;
   measuring an intensity of light transmitted through the optical cell for sedimentation analysis; and
   determining that anisotropic particles are present in the sample in a part where the intensity of the light is relatively high.
[8] A centrifugal sedimentation analysis method including:
   using the device according to the above item [6];
   applying centrifugal acceleration to the optical cell for sedimentation analysis containing a sample;
   measuring an intensity of light transmitted through the optical cell for sedimentation analysis; and
   determining that anisotropic particles are present in the sample in a part where the intensity of the light is relatively high.
[9] The centrifugal sedimentation analysis method according to the above item [8],
   in which when a relative intensity of the light in a direction of centrifugal acceleration is measured, a position representing an inflection point of the intensity of the light is determined to be a sedimentation plane of anisotropic particles in the sample.

### [Advantageous Effects of Invention]

According to the present invention, anisotropic sedimentation of anisotropic particles can be analyzed by a centrifugal sedimentation analysis using an optical cell, for which restrictions on the quality of material are more relaxed.

### [Brief Description of Drawings]

FIG. 1 is a cross-sectional view schematically showing an optical cell according to the present embodiment.
FIG. 2 is a diagram of a polarizing plate as viewed in a plan view from the direction of a light source, for explaining the relationship between the direction of the polarization axis of any one of two polarizing plates and the direction of centrifugal acceleration.
FIG. 3 is a diagram of a polarizing plate as viewed in a plan view from the direction of a light source, for explaining the relationship between the direction of the polarization axis of the other one of the two polarizing plates and the direction of centrifugal acceleration.
FIG. 4 is a diagram schematically showing a centrifugal sedimentation analysis device according to the present embodiment.

### [Description of Embodiments]

Embodiments of the present invention will be described below; however, the present invention can be carried out after appropriate modifications are made to the extent that the gist of the invention is maintained. Numbers, materials, amounts, shapes, numerical values, ratios, positions, configurations, and the like may be modified, added, omitted, or substituted to the extent that the gist of the present invention is maintained.

### (Optical cell for sedimentation analysis)

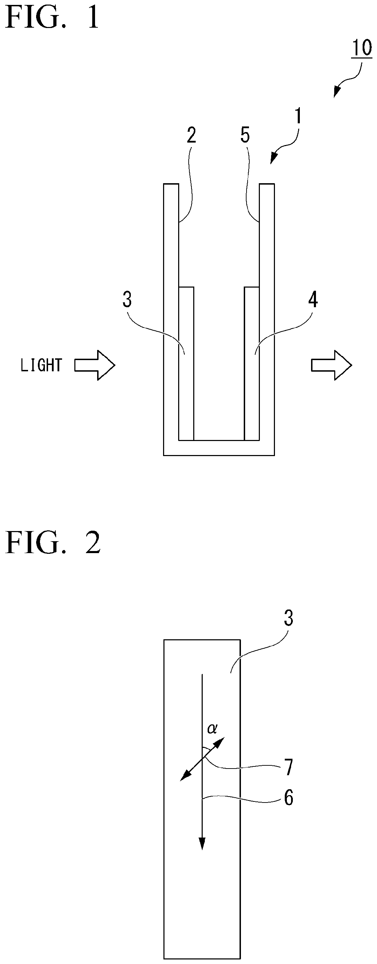

FIG. 1 is a cross-sectional view schematically showing an optical cell for sedimentation analysis 10 according to the present embodiment. In FIG. 1, for convenience of explanation, the light transmitted through the optical cell for sedimentation analysis 10 is indicated by an arrow.

The optical cell for sedimentation analysis 10 has, for example, an optical cell 1 and two polarizing plates. The optical cell 1 has a pair of opposing surfaces 2 and 5 through which light is transmitted. The surfaces 2 and 5 are inner wall surfaces of the optical cell 1. Each of the two polarizing plates 3 and 4 is disposed in a crossed Nicols state on each of the pair of opposing surfaces 2 and 5.

The surfaces 2 and 5 are located on, for example, the outer side of the polarizing plates 3 and 4. The pair of opposing surfaces 2 and 5, through which light is transmitted, are not located between the polarizing plates 3 and 4 disposed in a crossed Nicols state on the optical path. Therefore, in the optical cell 1, the material constituting the portions corresponding to these surfaces 2 and 5 does not need to be an optical material that handles polarized light and has no birefringence, and may have birefringence. Such a material may be a resins that is cheaper than the optical material, and examples thereof include a polycarbonate.

In FIG. 1, the optical cell for sedimentation analysis 10 having a rectangular parallelepiped optical cell 1 is shown as an example; however, the optical cell for sedimentation analysis 10 according to the present embodiment is not limited to this example. The shape of the optical cell 1 may have a pair of opposing surfaces through which light is transmitted, and examples thereof include a rectangular parallelepiped shape and a cylindrical shape. In the case of a cylindrical shape, the pair of opposing surfaces through which light is transmitted may be an upper bottom and a lower bottom, or may be side surfaces.

The optical cell 1 can be produced by, for example, providing polarizing plates 3 and 4 on two inner surfaces on the optical path of an existing optical cell for sedimentation analysis. The polarizing plates 3 and 4 are preferably film-shaped polarizing plates, from the viewpoint of the easiness of production. When a film-shaped polarizing plate is used, it can be cut in advance according to the shape of the inner wall surfaces 2 and 5, and the polarization axes of the polarizing plates 3 and 4 can be easily aligned in desired directions. Furthermore, it is more preferable that the polarizing plates 3 and 4 have an adhesive on one side because the polarizing plates can be easily adhered to the surfaces 2 and 5.

The two polarizing plates 3 and 4 provided on the surfaces 2 and 5 are disposed such that their polarization axes are in a crossed Nicols state. In this case, it is preferable that the two polarizing plates 3 and 4 are disposed such that the angle of their polarization axes is exactly 90°; however, a deviation from 90° to the extent that does not significantly affect the measurement results is tolerable. The angle between the polarization axis of the polarizing plate 3 and the polarization axis of the polarizing plate 4 is usually in the range of 90°±5°, and the angle may also be 90°±20° or 90°±10°.

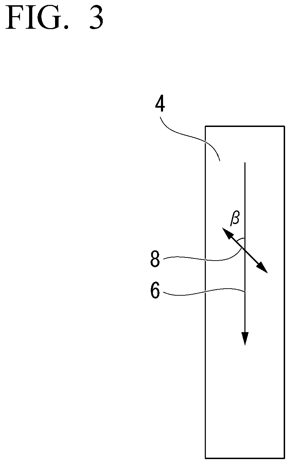

Furthermore, in the case of an optical cell for sedimentation analysis in which the direction of application of the centrifugal acceleration is known in advance, it is preferable that the two polarizing plates 3 and 4 are disposed such that each of the polarization axes of the polarizing plates forms an angle of about 45° with respect to the direction of application of the centrifugal acceleration, from the viewpoint of the detection sensitivity of anisotropic sedimentation. For example, when the optical cell 1 is installed in a centrifugal sedimentation analysis device 100 that will be described later and is viewed from the direction of the light source of the device, the angles of the polarization axes of the polarizing plates may be adjusted as shown in FIG. 2 and FIG. 3. FIG. 2 is a diagram of the polarizing plate 3 as viewed in a plan view from the direction of the light source, and is a diagram for explaining the relationship between the direction of the polarization axis of one polarizing plate 3 of the two polarizing plates and the direction of centrifugal acceleration. FIG. 3 is a diagram of the polarizing plate 4 as viewed in a plan view from the direction of the light source, and is a diagram for explaining the relationship between the direction of the polarization axis of one polarizing plate 4 of the two polarizing plates and the direction of centrifugal acceleration. The directions of the polarization axes of the polarizing plate 3 the polarizing plate 4 may be exchanged.

As shown in FIG. 2, the polarization axis 7 of one polarizing plate 3 has an angle α of about 45° with respect to the direction 6 of centrifugal acceleration, and as shown in FIG. 3, the polarization axis 8 of the other polarizing plate 3 has an angle β of about 45° with respect to the direction 6 of centrifugal acceleration. In addition, these polarization axis 7 and polarization axis 8 are disposed in a crossed Nicols state, as described above. That is, α+β is about 90°.

In the present embodiment, it is most preferable that the angle of about 45° is exactly 45°; however, a deviation from 45° is allowed to the extent that does not significantly affect the measurement results, and the angle is preferably in the range of 45°±10°, and more preferably 45°±5°.

### (Centrifugal sedimentation analysis device)

The centrifugal sedimentation analysis device of the present embodiment has an optical cell for sedimentation analysis 10, and the device applies centrifugal acceleration in a direction in which the angle formed between any of the polarization axes 7 and 8 of two polarizing plates 3 and 4 of this optical cell for sedimentation analysis 10 and the direction is about 45°, and measures the intensity of light transmitted through the two polarizing plates 3 and 4 (hereinafter, may be referred to as "transmitted light intensity"). A sample is accommodated in the optical cell 1 of the optical cell for sedimentation analysis 10.

The transmitted light intensity increases when centrifugal acceleration is applied to cause anisotropic sedimentation of anisotropic particles in the sample charged in the optical cell 1.

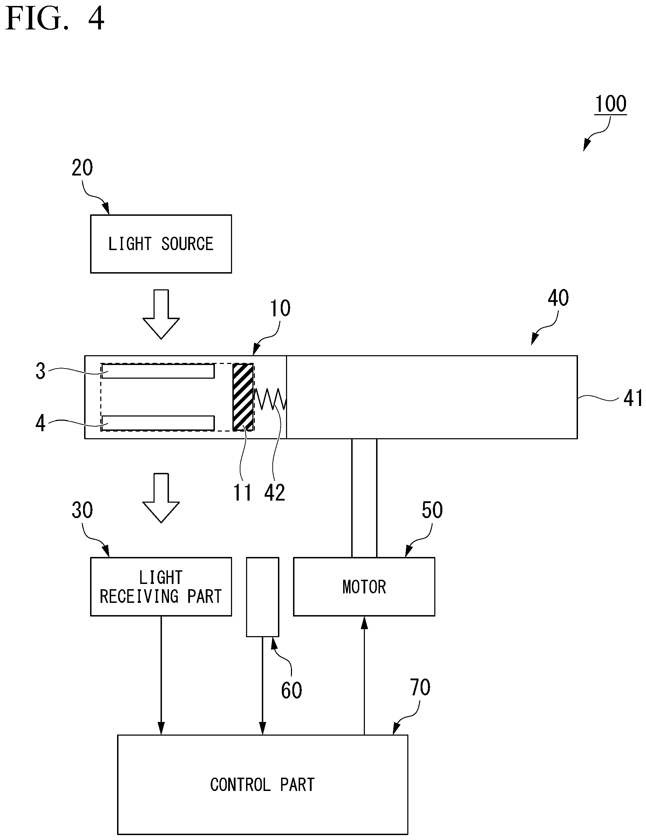

FIG. 4 is a diagram schematically showing the centrifugal sedimentation analysis device 100 of the present embodiment. The centrifugal sedimentation analysis device 100 includes, for example, a concentration detector having a light source 20 and a light receiving unit (photodetector) 30; a rotating disc 40 on which the optical cell for sedimentation analysis 10 is installed; a motor 50 for rotating the rotating disc 40; a detection device 60 for measurement position or the like for measuring the angle of the optical cell for sedimentation analysis 10, the speed of rotation of the rotating disc 40, or the like; and a control unit 70.

In the centrifugal sedimentation analysis device 100, the rotating disc 40 has, for example, a main body 41 and a cell fixing unit 42. The cell fixing unit 42 is composed of, for example, a spring. The optical cell for sedimentation analysis 10 is fixed to the cell fixing unit 42, for example, in a state of being sealed by a cell cap 11. The control unit 70 has, for example, an amplifier that is not shown in the diagram, an A/D converter, an inverter, and a CPU. Signals from the light receiving unit 30 and the detection device 60 for measurement point or the like are amplified by, for example, an amplifier inside the control unit and are inputted to the CPU via an A/D converter. The CPU of the control unit outputs, for example, a signal to the motor via an inverter and controls the speed of rotation of the rotating disc 40.

Furthermore, it is preferable that the measurement of the transmitted light intensity is to measure an intensity change in the direction of centrifugal acceleration. That is, it is preferable to measure the intensity of light in the direction of centrifugal acceleration and to obtain the distribution of the intensities of light transmitted through the two polarizing plates 3 and 4 in the direction of centrifugal acceleration. Examples of such a centrifugal sedimentation analysis device include a device including means for scanning the optical cell for sedimentation analysis 10 in the direction of centrifugal acceleration with a pair of light sources 20 and a photodetector (light receiving unit) 30; a device including one light source 20 and a plurality of detectors (light receiving units) 30 and 30 arranged in the direction of centrifugal acceleration; a device including a plurality of light sources 20 arranged in the direction of centrifugal acceleration and one detector (light receiving unit) 30; and a device including a plurality of pairs of light sources 20 and 20 arranged in the direction of centrifugal acceleration and a light receiving unit 30.

A sedimentation plane of anisotropic sedimentation can be detected by measuring the intensity of light in the direction of centrifugal acceleration and obtaining the distribution of the intensities of light transmitted through the optical cell for sedimentation analysis 10 in the direction of centrifugal acceleration. When a sedimentation plane occurs, the intensity of light is relatively weaker on the centrifugal axis side than on the sedimentation plane, and the intensity of light is relatively stronger in the direction of centrifugal acceleration than on the sedimentation plane.

### (Centrifugal sedimentation analysis method)

In the centrifugal sedimentation analysis method of the present embodiment, centrifugal acceleration is applied to the optical cell for sedimentation analysis 10 using the centrifugal sedimentation analysis device according to the above-described embodiment, the intensity of light transmitted through the optical cell for sedimentation analysis 10 containing a sample is measured, and it is determined that anisotropic particles are present in the sample in a portion where the transmitted light intensity is relatively high. That is, in the centrifugal sedimentation analysis method according to the present embodiment, when the intensity of transmitted light is relatively high at a predetermined position in the direction of centrifugal acceleration, it is determined that anisotropic particles are present in the sample in a portion corresponding to the position in the direction of centrifugal acceleration.

In addition, at the time of measuring the relative light intensity in the direction of centrifugal acceleration, when anisotropic sedimentation of anisotropic particles occurs, the transmitted light intensity is weak on the centrifugal axis side, and as it advances therefrom in the direction of centrifugal acceleration, there is a portion where the transmitted light intensity becomes stronger. In the centrifugal sedimentation analysis method according to the present embodiment, for example, the position representing the inflection point of the transmitted light intensity in the direction of centrifugal acceleration is determined to be the sedimentation plane of the anisotropic particles in the sample.

The present invention is not intended to be limited to specific embodiments and can be carried out by appropriately combining the embodiments within the scope of the gist described in the claims. For example, it is also possible to carry out the invention by combining configurations disclosed in different embodiments.

In the centrifugal sedimentation analysis method and the centrifugal sedimentation analysis device according to the present embodiment, since the material of the optical cell is not limited to an expensive material that can withstand even centrifugal acceleration and does not have birefringence, anisotropic sedimentation of anisotropic particles can be analyzed by a centrifugal sedimentation analysis using an optical cell for which restrictions on the quality of material are relaxed.

### [Examples]

The present invention will be described below more specifically by way of Examples and Comparative Examples; however, the present invention is not intended to be limited to the following Examples.

### (Measurement material)

Aqueous dispersions containing the following silver nanowires A to C or silver particles D to F were used as measurement samples in Examples and Comparative Examples that will be described later. The silver particle E and the silver particle F are particles obtained by ultrasonically pulverizing the silver nanowire A and the silver nanowire B, respectively, for 10 minutes until they lost their orientation.
Silver nanowire A: Manufactured by Showa Denko K.K., silver nanowire having an average diameter of 28 nm and an average length of 26 µm
Silver nanowire B: Manufactured by Showa Denko K.K., silver nanowire having an average diameter of 20 nm and an average length of 20 µm
Silver nanowire C: Manufactured by Sigma-Aldrich Company, silver nanowire having an average diameter of 20 nm and an average length of 12 µm
Silver particle D: Manufactured by Nano Composix, Inc., spherical silver particle having an average particle size of 25 nm
Silver particle E: Silver particle obtained by pulverizing silver nanowire A
Silver particle F: Silver particle obtained by pulverizing silver nanowire B

### (Examples 1 to 6)

An optical cell for sedimentation analysis having polarizing plates stuck inside was produced as follows. First, a polarizing film having an adhesive layer on one side (BS-250 manufactured by Midtown Co., Ltd., thickness 0.25 mm) was cut to produce two sheets of a rectangular-shaped section having a size of 7 mm × 30 mm. The polarization axes of these sections were set at an angle of 45° with respect to the direction in which the 30-mm long side extended.

The section (polarizing plate 3) was inserted down to the bottom of a commercially available optical cell (manufactured by MS Scientific Co., Ltd., Lumisizer cell, internal dimensions: length (optical path length) 2 mm, width 8 mm, height 50 mm, material: polycarbonate) 1 and was attached so as to obtain a configuration similar to that of the optical cell for sedimentation analysis 10 of FIG. 1. The polarizing plate 3 was attached by pressing with a flat spatula while being careful not to introduce air bubbles, so that the adhesive surface of the section and one surface 2 having a size of 8 mm × 50 mm were closely adhered. A polarizing plate 4 was also similarly attached to the other surface 5 having a size of 8 mm × 50 mm. The polarization axes of the two polarizing plates of the optical cell 1 thus produced were within the range of 45°±2° with respect to the 50-mm long side of the cell. Furthermore, the two polarizing plates 3 and 4 were disposed in a crossed Nicols state.

As measurement samples, aqueous dispersions having the sample compositions shown in Table 1 were used. As shown in "Sample Composition" in Table 1, Examples 1 to 6 differ in the composition of the measurement sample. The optical cell for sedimentation analysis produced as described above was filled with a sample. This optical cell for sedimentation analysis was disposed such that the direction in which the 50-mm long side extended was parallel to the direction of centrifugal acceleration, and such that two surfaces having a size of 8 mm × 50 mm were perpendicular to the optical path of the measurement light. Furthermore, the optical cell for sedimentation analysis was installed on a rotor of a centrifugal sedimentation analysis device (manufactured by MS Scientific Co., Ltd., LUMiSizer) such that the portions where the polarizing plates were installed were on the optical path, that is, light was incident perpendicularly to the two polarizing plates and was transmitted through the two polarizing plates.

Next, the rotor was rotated, and while the centrifugal acceleration was increased stepwise, the transmitted light intensity was measured with light having a wavelength of about 470 nm. With regard to the transmitted light intensity, in the device used in the Examples, light is received by a light receiving unit having resolution in the direction of centrifugal acceleration (a line sensor having 2000 or more light receiving units lined up in the direction of centrifugal acceleration), and the transmitted light intensity is expressed as transmittance converted on the basis of the transmitted high intensity in a state without the optical cell for sedimentation analysis as 100%. The results are shown in Table 1.

In Examples 1 to 6, the transmittance of the entire cell immediately after initiation of rotation of the rotor (also referred to as "initial transmittance") was uniformly low in the direction of centrifugal acceleration and was about 0.5% as shown in Table 1. When the centrifugal acceleration shown in Table 1 was applied, it was confirmed that the optical cell for sedimentation analysis was divided into two, namely, a region of high transmittance and a region of low transmittance in the direction of centrifugal rotation. The transmittance of the optical cell for sedimentation analysis showed no change as compared with the initial transmittance on the centrifugal axis side (that is, referring to a region that is in a direction opposite to the direction of centrifugal acceleration and is close to the axis of rotation; hereinafter, the centrifugal axis side may be referred to as "upper side"). That is, the upper side corresponds to a region of low transmittance. On the other hand, on the opposite side (that is, referring to a region that is in the direction of centrifugal acceleration and is on the side farther from the axis of rotation than the upper side; hereinafter, the opposite side may be referred to as "lower side"), the transmittance was higher than the initial transmittance, as shown in Table 1. That is, the lower side corresponds to a region of low transmittance. Furthermore, the optical cell for sedimentation analysis has a part where the transmittance changes (inflection point of relative changes in the transmitted light intensity in the direction of centrifugal acceleration) on the upper side and the lower side. The inflection point is located at the interface between the region of high transmittance and the region of low transmittance in the direction of centrifugal acceleration. It was observed that the inflection point moved downward at the speed described in the column for sedimentation velocity in Table 1 as rotation of the optical cell for sedimentation analysis was continued at a constant centrifugal acceleration.

From the above-described results, it is determined that the silver nanowires in the samples, which are anisotropic particles, undergo anisotropic sedimentation at the sedimentation velocities shown in Table 1 while being oriented.

### (Examples 7 to 12)

In Examples 7 to 12, measurement was conducted in the same manner as in Example 1 to Example 6, except that the two polarizing plates were disposed such that one of the polarization axes of the two polarizing plates was parallel while the other was perpendicular to the direction of centrifugal acceleration, and measurement was made. More specifically, the Examples are different from Example 1 from the viewpoint that the optical cells were produced such that when the polarizing film was cut into two sheets of sections, one of the polarization axes was 0° while the other was 90° with respect to the direction in which the 30-mm long side of the section extended. The results are shown in Table 1.

From Table 1, when each pair of Examples 1 and 7, Examples 2 and 8, Examples 3 and 9, Examples 4 and 10, Examples 5 and 11, and Example 6 and 12, which had the same sample compositions but different slopes of the polarization axes, was compared, the lower side transmittance was different; however, they showed similar tendencies in terms of other matters. The lower transmittance was higher in Examples 1 to 6 compared to Examples 7 to 12. Since silver nanowires are likely to be oriented in a direction of acceleration, it is considered that anisotropic sedimentation was observed notably with higher sensitivity in Examples 1 to 6 in which the polarization axis was 45° with respect to the direction of centrifugal acceleration.

### (Examples 13 to 17)

Examples 13 to 17 were measured in the same manner as in Examples 1 to 6, except that the sample compositions and measurement conditions shown in Table 1 were used. That is, in Examples 13 to 17, the direction of the polarization axis of the polarizing plate in the optical cell for sedimentation analysis was set to be the same as in Examples 1 to 6, and the centrifugal acceleration was changed from that in Examples 1 to 6. The results are shown in Table 1.

**[Table 1]**

| | Sample composition | Measurement conditions | | Measurement results | | | |
|---|---|---|---|---|---|---|---|
| | | Slope of polarization axis of polarizing plate with respect to direction of acceleration | Centrifugal acceleration (G) | Initial transmittance (%) | Upper side transmittance (%) | Lower side transmittance (%) | Sedimentation velocity (µm/s) |
| Example 1 | Silver nanowire A 1000 ppm by mass | 45° | 500 | 0.5 | 0.5 | 4 | 32.8 |
| Example 2 | Silver nanowire A 500 ppm by mass | 45° | 500 | 0.5 | 0.5 | 3 | 34.3 |
| Example 3 | Silver nanowire B 1000 ppm by mass | 45° | 2100 | 0.5 | 0.5 | 8 | 55.5 |
| Example 4 | Silver nanowire B 500 ppm by mass | 45° | 2100 | 0.5 | 0.5 | 8 | 55.2 |
| Example 5 | Silver nanowire C 1000 ppm by mass | 45° | 2100 | 0.5 | 0.5 | 4 | 46.1 |
| Example 6 | Silver nanowire C 500 ppm by mass | 45° | 2100 | 0.5 | 0.5 | 2 | 55.8 |
| Example 7 | Silver nanowire A 1000 ppm by mass | 0°, 90° | 500 | 0.5 | 0.5 | 2 | 32.8 |
| Example 8 | Silver nanowire A 500 ppm by mass | 0°, 90° | 500 | 0.5 | 0.5 | 1 | 34.3 |
| Example 9 | Silver nanowire B 1000 ppm by mass | 0°, 90° | 2100 | 0.5 | 0.5 | 2 | 55.5 |
| Example 10 | Silver nanowire B 500 ppm by mass | 0°, 90° | 2100 | 0.5 | 0.5 | 3 | 55.2 |
| Example 11 | Silver nanowire C 1000 ppm by mass | 0°, 90° | 2100 | 0.5 | 0.5 | 2 | 46.1 |
| Example 12 | Silver nanowire C 500 ppm by mass | 0°, 90° | 2100 | 0.5 | 0.5 | 1 | 55.8 |
| Example 13 | Silver particle D 1000 ppm by mass | 45° | 1600 | 0 | 0 | 0 | - |
| Example 14 | Silver particle D 500 ppm by mass | 45° | 2000 | 0 | 0 | 0 | - |
| Example 15 | Silver nanowire B 250 ppm by mass | 45° | 500 | 0.5 | 0.5 | 4 | 33.3 |
| | Silver particle D 25 ppm by mass | | | | | | |
| Example 16 | Silver particle E 500 ppm by mass | 45° | 2100 | 0 | 0 | 0 | - |
| Example 17 | Silver particle F 500 ppm by mass | 45° | 2100 | 0 | 0 | 0 | - |

### (Comparative Examples 1 to 4)

A commercially available optical cell (manufactured by MS Scientific Co., Ltd., Lumisizer cell, internal dimensions: length (optical path length) 2 mm, width 8 mm, height 50 mm, material: polycarbonate) was filled with an aqueous dispersion having the sample composition shown in Table 2 as a measurement sample, without disposing polarizing plates. This cell was installed on a rotor of a centrifugal sedimentation analysis device (manufactured by MS Scientific Co., Ltd., LUMiSizer) such that the 50-mm long side was parallel to the direction of centrifugal acceleration, and two surfaces having a size of 8 mm × 50 mm were disposed perpendicular to the optical path of the measurement light, the centrifugal acceleration shown in Table 3 was applied, the transmittance in the upper region and the lower region was measured, and the moving speed of the inflection point, that is, the sedimentation velocity was measured. The results are shown in Table 2.

**[Table 2]**

| | Sample composition | Centrifugal acceleration (G) | Sedimentation velocity (µm/s) |
|---|---|---|---|
| Comparative Example 1 | Silver particle D 1000 ppm by mass | 1600 | 2.5 |
| Comparative Example 2 | Silver particle D 500 ppm by mass | 2000 | 4.1 |
| Comparative Example 3 | Silver particle E 500 ppm by mass | 2100 | 53.0 |
| Comparative Example 4 | Silver particle F 500 ppm by mass | 2100 | 35.1 |

In Comparative Examples 1 and 2, which are conventional centrifugal sedimentation analyses, sedimentation of spherical particles is recognized. On the other hand, in Examples 13 and 14, the transmitted light intensity is 0 both before and after centrifugation, and sedimentation of spherical particles is not measured. That is, it can be seen that in the method of the present embodiment, only the anisotropic sedimentation of anisotropic particles can be selectively measured.

Therefore, even in a system in which anisotropic particles and spherical particles coexist as in Example 15, it can be determined that only the anisotropic sedimentation of the anisotropic particles is measured.

Furthermore, anisotropic sedimentation is no longer observed in particles (silver particles E and F) that have lost their orientation (Examples 16 and 17), as damage such as breakage and fracture proceeds. In contrast, in Comparative Examples 3 and 4 in which silver particles E and F were analyzed by conventional centrifugal sedimentation analysis, sedimentation of silver particles E and F is confirmed.

From the above, it can be seen that the observed anisotropic sedimentation differs depending on the degree of damage, in particles such as silver nanowires in which damage such as breakage fracture occurs due to handling. For this reason, the present invention can also be applied to quality inspection of anisotropic particles, and the like.

### [Reference Signs List]

1: Optical cell
2: Surface (surface of inner wall of optical cell)
3: One polarizing plate
4: The other polarizing plate
5: Surface (surface of inner wall of optical cell)
6: Arrow indicating direction of centrifugal acceleration
7: Arrow indicating polarization axis of one polarizing plate
8: Arrow indicating polarization axis of the other polarizing plate
10: Optical cell for sedimentation analysis
100: Centrifugal sedimentation analysis device

## Claims

1. An optical cell for sedimentation analysis comprising:
a pair of opposing surfaces through which light is transmitted; and
two polarizing plates,
wherein each of the two polarizing plates is disposed in a crossed Nicols state on each of the pair of opposing surfaces.

2. The optical cell for sedimentation analysis according to Claim 1,
wherein the pair of opposing surfaces are composed of a resin having birefringence.

3. The optical cell for sedimentation analysis according to Claim 2,
wherein the resin is a polycarbonate.

4. A centrifugal sedimentation analysis device comprising the optical cell for sedimentation analysis according to any one of Claims 1 to 3,
wherein centrifugal acceleration is applied to the optical cell for sedimentation analysis, and an intensity of light transmitted through the optical cell for sedimentation analysis is measured.

5. The centrifugal sedimentation analysis device according to Claim 4,
wherein an angle formed between a direction in which centrifugal acceleration is applied to the optical cell for sedimentation analysis and each of polarization axes of the two polarizing plates is 35° to 55°.

6. The centrifugal sedimentation analysis device according to Claim 4 or 5,
wherein the intensity of the light is measured in the direction of centrifugal acceleration, and a distribution of intensities of light transmitted through the optical cell for sedimentation analysis in the direction of centrifugal acceleration is obtained.

7. A centrifugal sedimentation analysis method comprising:
using the device according to Claim 4 or 5;
applying centrifugal acceleration to the optical cell for sedimentation analysis containing a sample;
measuring an intensity of light transmitted through the optical cell for sedimentation analysis; and
determining that anisotropic particles are present in the sample in a part where the intensity of the light is relatively high.

8. A centrifugal sedimentation analysis method comprising:
using the device according to Claim 6;
applying centrifugal acceleration to the optical cell for sedimentation analysis containing a sample;
measuring an intensity of light transmitted through the optical cell for sedimentation analysis; and
determining that anisotropic particles are present in the sample in a part where the intensity of the light is relatively high.

9. The centrifugal sedimentation analysis method according to Claim 8,
wherein when a relative intensity of the light in a direction of centrifugal acceleration is measured, a position representing an inflection point of the intensity of the light is determined to be a sedimentation plane of anisotropic particles in the sample.
